## Europäisches Patentamt
## European Patent Office
## Office européen des brevets

(11) Veröffentlichungsnummer: **0 201 822 B1**

(12) # EUROPÄISCHE PATENTSCHRIFT

(45) Veröffentlichungstag der Patentschrift: **04.03.92**

(51) Int. Cl.⁵: **G11B 5/706**, H01F 1/11, C01G 49/06

(21) Anmeldenummer: **86106092.9**

(22) Anmeldetag: **03.05.86**

(54) **Verfahren zur Herstellung nadelförmiger, kobalthaltiger ferrimagnetischer Eisenoxide.**

(30) Priorität: **10.05.85 DE 3516885**

(43) Veröffentlichungstag der Anmeldung:
**20.11.86 Patentblatt 86/47**

(45) Bekanntmachung des Hinweises auf die Patenterteilung:
**04.03.92 Patentblatt 92/10**

(84) Benannte Vertragsstaaten:
**DE FR GB NL**

(56) Entgegenhaltungen:
**EP-A- 0 014 363**
**DE-B- 1 176 111**
**DE-B- 1 219 009**
**DE-B- 1 225 157**

**CHEMICAL ABSTRACTS, Band 88, Nr. 16, 17. April 1978, Seiten 629-630, Zusammenfassung Nr. 114479k, Columbus, Ohio, US; & JP-A-77 135 895 (TODA KOGYO CORP.)**

**IDEM.**

(73) Patentinhaber: **BASF Aktiengesellschaft**
**Carl-Bosch-Strasse 38**
**W-6700 Ludwigshafen(DE)**

(72) Erfinder: **Steck, Werner, Dr.**
**Auerstrasse 4**
**W-6700 Ludwigshafen(DE)**
Erfinder: **Feser, Rainer, Dr.**
**Gerhart-Hauptmann-Strasse 33**
**W-6717 Hessheim(DE)**
Erfinder: **Loeser, Werner, Dr.**
**Klagenfurter Strasse 16**
**W-6700 Ludwigshafen(DE)**
Erfinder: **Rudolf, Peter, Dr.**
**Nibelungenweg 14**
**W-6701 Maxdorf(DE)**
Erfinder: **Vaeth, Guenter**
**Woogstrasse 35**
**W-6703 Limburgerhof(DE)**
Erfinder: **Jakusch, Helmut, Dr.**
**Lorscher Ring 6c**
**W-6710 Frankenthal(DE)**
Erfinder: **Kovacs, Jenoe, Dr.**
**Kantstrasse 9**
**W-6717 Hessheim(DE)**

Rank Xerox (UK) Business Services

**Beschreibung**

Die Erfindung betrifft ein Verfahren zur Herstellung von Kobalt- und Phosphationen und gegebenenfalls weitere Zusatzstoffe enthaltender nadelförmiger ferrimagnetischer Eisenoxide sowie derer, Verwendung zur Herstellung von magnetischen Aufzeichnungsträgern.

Für die Herstellung von magnetischen Aufzeichnungsträgern wird als magnetisches Material in großem Umfang nadelförmiges Gamma-Eisen (III) oxid bzw. Kobalt enthaltendes Gamma-Eisen (III) oxid eingesetzt. Dieses wird ausgehend vom Eisenoxidhydroxid durch Entwässern, Reduktion zum Magnetit und anschließender Oxidation bzw. durch nachfolgende Ausrüstung mit kobalthaltigen Niederschlägen und gegebenenfalls Tempern erhalten.

Die Eisenoxidhydroxidbasis spielt dabei für die Eigenschaften eines Magnetpigments im Aufzeichnungsträger eine wesentliche Rolle. So haben die mittlere Teilchenform und -größe sowie deren Verteilung im FeOOH-Pigment einen starken Einfluß auf magnetische Eigenschaften wie Richtverhalten. Koerzitivkraft und Schaltfeldstärkenverteilung. Feinanteile im Eisenoxidhydroxid können zu ungünstigen Kopierdämpfungswerten führen.

Zur Herstellung von nadelförmigem Eisenoxidhydroxid ist in der Literatur das sogenannte saure Verfahren angegeben. Bei diesem zweistufigen Prozeß wird aus einer Fe(II)-Salzlösung zunächst ein Teil des Fe (II) in Form von $Fe(OH)_2$ ausgefallt und dieses mit Luft zu FeOOH-Keimen oxidiert. In einem zweiten Schritt wachsen durch weitere Oxidation der Fe (II)-Ionen bei einem pH-Wert von unter 7 die FeOOH-Keime zum Endprodukt. Dieses Verfahren ist zur Herstellung von magnetischem Material für magnetische Aufzeichnungsträger sowohl für die $\alpha$- bzw. $\gamma$-Modifikation u.a. in der US-PS 2 694 656 bzw. der DE-AS 10 61 760 beschrieben. Darüber hinaus sind in einer Reihe von Schriften Varianten veröffentlicht, bei denen das Eisenoxidhydroxid-Pigment mit Fremdionen dotiert wird. Neben Übergangsmetall-Kationen. wie z.B. Zn (DE-AS 13 00 861) können auch Anionen und vor allem auch solche, die Elemente der V. Hauptgruppe enthalten, den Syntheseverlauf bzw. die Produkteigenschaften beeinflussen. In der DE-B 11 76 111 wird ein Verfahren zur Herstellung von $\alpha$-FeOOH durch Bereiten einer $\alpha$-FeOOH-Keimsuspension durch Oxidieren einer frisch gefällten Eisen(II)-hydroxid-Suspension in saurem Medium, Vergrößern der Keimteilchen durch Eintragen von metallischem Eisen in die saure Keimsuspension und Zugeben eines Oxidationsmittels beschrieben, wobei zu Beginn der Keimbildungsphase Phosphat-Ionen zugesetzt werden und damit nach der Umwandlung zum Gamma-Eisen(III)oxid Teilchen mit einer gedrungenen Nadelform erhalten werden. Bei einer in der DE-B 12 19 009 beschriebenen Methode werden in alkalischem Medium durch die Zugabe von Phosphat-Ionen während der Keimbildungsphase isometrische $\gamma$-FeOOH-Teilchen hergestellt. Mit der Bildung Von $\gamma$-FeOOH befaßt sich auch das in der DE-B 12 25 157 und in der DE-B 12 23 352 beschriebene Verfahren. Hierbei werden durch die Zugabe von Phosphat-Ionen und gegebenenfalls weiterer dreiwertiger Ionen der Elemente B, Al, Cr, Mn bzw. von Arsenat-Ionen und gegebenenfalls weitere der zuvor genannten Ionen sowohl vor, während oder nach der Keimbildungsphase die Keime thermostabilisiert und die Raum/ Zeit-Ausbeute erhöht. Die Zugabe von Phosphat-Ionen zu Suspensionen, welche das bereits gebildete FeOOH enthalten, wird in der JP-A 77 135 895 angegeben. Das so nachbehandelte FeOOH wird dann zum Magnetit umgewandelt und noch mit Kobalt modifiziert.

Auch hinsichtlich der weiteren Verfahrensschritte der Gamma-Eisen(III)-oxid-Herstellung und der Modifikationen mit Kobalt sind bereits eine Reihe von Wegen vorgeschlagen worden. Die vielfältigen und auch unterschiedlichen Versuche zur Herstellung der nadelförmigen kobalthaltigen Eisenoxide zeigen, daß die Anforderungen an das als magnetisches Material für magnetische Aufzeichnungsschichten eingesetzte Produkt sehr hoch sind. So ist es u.a. wesentlich, daß das magnetische Material eine hohe Feinteiligkeit aufweist, damit die bei magnetischen Aufzeichnungsträger für Videosignale wichtige glatte Oberfläche der Magnetschicht möglich wird und sich günstige Rauschwerte erzielen lassen. Die Werte für die je nach Anwendungsfall wichtigen Rausch- bzw. Störabstandseigenschaften lassen sich aber weitgehend erst nach Einarbeiten des magnetischen Materials in eine entsprechende Magnetschicht feststellen.

Aufgabe der vorliegenden Erfindung war es daher, ein Verfahren zur Herstellung von nadelförmigen, kobalthaltigen ferrimagnetischen Eisenoxiden bereitzustellen, welche sowohl die aufzeichnungstechnisch erforderlichen magnetischen Eigenschaften, wie eine hohe Koerzitivfeldstärke, aufweisen als auch nach Einarbeitung in eine Magnetschicht bei der Videoaufzeichnung gegenüber dem Stand der Technik Luminanz-Störabstandswerte, bei der Audioaufzeichnung ein günstiges Rausch/Kopierverhältnis und bei der digitalen Aufzeichnung hohe Datendichten ermöglichen.

Es wurde nun überraschenderweise gefunden, daß sich nadelförmige. kobalthaltige ferrimagnetische Eisenoxide mit den aufgabengemäß geforderten Eigenschaften herstellen lassen, wenn nach dem sauren Verfahren in einer ersten Stufe aus einer Eisen(II)salzlösung durch Zugabe von Alkalien unter gleichzeitiger Oxidation mittels Einleiten von Luft aus 25 bis 60 Mol-% der Eisen(II)ionen $\gamma$-FeOOH-Keime in Gegenwart von, bezogen auf die Menge an γ-FeOOH-Endprodukt, 0,2 bis 1,0 Gew.-% Phosphat-Ionen erzeugt werden und diese Keime dann in einer zweiten Stufe bei einer Temperatur von 20 bis 70 °C unter Zugabe von weiterem Alkali und Einleiten von Luft bei einem pH-Wert zwischen 4 und 5,5 zum γ-FeOOH-Endprodukt weiterwachsen, das nach dem Abfiltrieren, Waschen und Trocknen bei Temperaturen zwischen 300 und 600 °C entwässert und mittels in Gegenwart von an Eisenoxid zersetzlicher organischer Substanzen bei 350 bis 500 °C zum Magnetit reduziert wird, um anschließend mit sauerstoffhaltigen Gasen bei 250 bis 500 °C zum Gamma-Eisen(III)oxid oxidiert zu werden, das dann durch Auffällen von Kobalthydroxid, gegebenenfalls Eisen(II)hydroxidhaltig, bei 20 bis 100 °C in alkalischer Suspension, Filtrieren, Trocknen und Tempern bei 100 bis 300 °C unter Inertgas modifiziert wird.

In einer weiteren Ausgestaltung des erfindungsgemäßen Verfahrens wird das abfiltrierte und gewaschene γ-FeOOH-Endprodukt in Gegenwart von an Eisenoxid zersetzlicher organischer Substanzen bei Temperaturen zwischen 350 und 500 °C entwässert und zum Magnetit reduziert, dieser dann mit sauerstoffhaltigen Gasen bei 250 bis 500 °C zum Gamma-Eisen (III) oxid oxidiert und das resultierende Gamma-Eisen (III) oxid durch Auffällen von Kobalthydroxid, gegebenenfalls Eisen (II) hydroxidhaltig, in alkalischer Suspension bei einem pH-Wert von nicht kleiner 10 modifiziert, filtriert, getrocknet und bei 100 bis 300 °C unter Inertgas getempert.

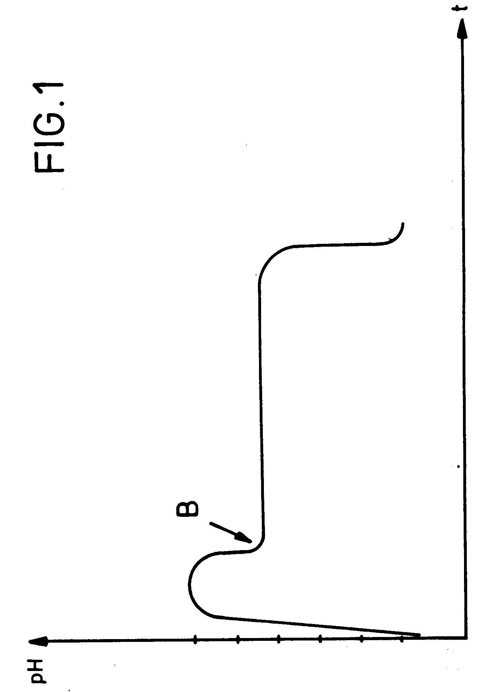

Nach dem Verfahren der Erfindung wird das γ-FeOOH (Lepidokrokit) aus Eisen (II) salzlösungen mit Alkalien unter gleichzeitiger Oxidation nach der sauren Synthese hergestellt. Als besonders zweckmäßig hat es sich erwiesen, aus einer wäßrigen Eisen(II) chloridlösung mittels Alkalien, wie Alkalihydroxid oder Ammoniak, bei Temperaturen zwischen 10 und 36 °C unter Lufteinleitung und kräftigem Rühren zur Erzeugung feiner Luftblasen, Eisen (III) oxidhydrat-Keime bis zu einer Menge von 25 bis 60 Mol.% des eingesetzten Eisens zu bilden. Die Zugabe der Phosphationen in Form von Ortho-Phosphorsäure und/oder deren primäre und/oder sekundäre und/oder tertiäre Alkali- und Ammoniumsalze erfolgt zweckmäßigerweise vor der Fe(OH)$_2$-Fällung, spätestens aber dann, wenn nach Oxidationsbeginn im pH-Profil der charakteristische Knickpunkt B erreicht wird, wie er aus dem pH-Wert/Zeit-Diagramm (Abb. 1) zu entnehmen ist. Die Phosphationen werden in Mengen von 0,2 bis 1,0 Gew.% bezogen auf γ-FeOOH-Endproduktzugesetzt, vorzugsweise in einer Menge von 0,3 bis 0,6 Gew.%. Aus den Keimen entsteht anschließend bei einer Temperatur zwischen 20 und 70 °C und bei einem durch Zusatz weiterer Alkalimengen eingestellten pH-Wert von 4,0 bis 5,5 unter intensiver Luftverteilung durch Zuwachs das Endprodukt. Nach beendetem Wachstum soll der Feststoffgehalt an Eisen (III) oxidhydroxid in der wäßrigen Suspension zwischen 10 und 70 g/l, bevorzugt bei 15 bis 65 g/l, liegen. Nach dem Abfiltrieren und Auswaschen des Niederschlags wird das so erhaltene Eisen (III) oxidhydrat bei 60 bis 200 °C getrocknet. Auf diese Weise lassen sich stabile Kristallnadeln von Lepidokrokit erhalten, welche nahezu keine dendritischen Verwachsungen aufweisen.

Anschließend wird das γ-FeOOH in an sich bekannter Weise zu γ-Fe$_2$O$_3$ umgewandelt. Dabei wird das Eisenoxidhydoxid entweder in einem separaten Schritt bei Temperaturen von 300 bis 600 °C zu α-Fe$_2$O$_3$ entwässert und das α-Fe$_2$O$_3$ in einer reduzierenden Atmosphäre bei 350 bis 500 °C zu Magnetit reduziert (z.B. gemäß DE-OS 27 35 316) oder in einem einzigen Schritt bei 350 bis 500 °C entwässert und zu Magnetit reduziert (z.B. gemäß DE-PS 22 12 435, DE-OS 31 43 870). Als Reduktionsmittel werden organische Verbindungen eingesetzt, die sich in Gegenwart von Eisenoxiden zersetzen, gegebenenfalls zusammen mit Wasserstoff und/oder Kohlenmonoxid. Dabei hat es sich als vorteilhaft herausgestellt, den organischen Stoff bereits zur frischen Herstellsuspension des γ-FeOOH oder auf der Stufe des ungewaschenen oder gewaschenen Filterkuchens oder dem getrockneten Produkt zuzusetzen. Als im Rahmen der Erfindung besonders zweckmäßig hat sich die Reduktion mittels organischer Substanzen in Anwesenheit von Zinnverbindungen gemäß DE-OS 32 04 547 herausgestellt. Außerdem kann es zweckmäßig sein, die γ-FeOOH-Teilchen in bekannter Weise durch Aufbringen anorganischer und/oder organischer Verbindungen in ihrer Form zu stabilisieren. Der als Zwischenstufe erhaltene Magnetit läßt sich in an sich bekannter Weise mit oxidierenden Gasen, wie z.B. Sauerstoff oder Luft. bei Temperaturen zwischen etwa 250 und 500 °C oxidieren. Abhängig von der jeweiligen Oxidationstemperatur haben sich Oxidationszeiten zwischen 10 Minuten und 2 Stunden als zweckmäßig erwiesen. Dabei sind die Oxidationsbedingungen so zu wählen, daß die bekannte irreversible Umwandlung von γ-Fe$_2$O$_3$ in α-Fe$_2$O$_3$ vermieden wird.

Die Kobaltdotierung des γ-Fe$_2$O$_3$ erfolgt durch Auffällen von Co(OH)$_2$ und Fe(OH)$_2$, z.B. gemäß der DE-OS 27 05 967, der EP-A-14 902 oder der EP-A-14 903. Dabei wird das γ-Fe$_2$O$_3$ in Wasser durch intensives Rühren suspendiert und durch Zugabe von Co(II)- und Fe(II)-Salzen sowie von NaOH, Co(OH)$_2$ und Fe(OH)$_2$ ausgefällt. Der pH-Wert der Suspension wird auf mindestens 10, vorzugsweise mindestens 12 eingestellt. Die Reihenfolge der Zugabe von Co(II)-, Fe(II)-Salz und NaOH kann bei dem erfindungsgemäßen Verfahren variiert werden. Vorzugsweise wird das γ-Fe$_2$O$_3$ zusammen mit dem Co(II)-Salz vorgelegt, NaOH zugegeben und nach einstündigem Rühren das Fe(II)-Salz zugeführt. Nach Ausfällung der Hydroxide empfiehlt es sich, noch längere Zeit intensiv zu rühren. Als vorteilhaft und ausreichend haben sich 4 bis 7 Stunden erwiesen. Der gesamte Reaktionsablauf wird unter Inertgasabdeckung vorgenommen. Die Reaktionstemperatur beträgt 20 bis 100° C, vorzugsweise 40 bis 70° C. Als Co(II)- und Fe(II)-Salze eignen sich besonders die Chloride und Sulfate. Bei ausschließlicher Dotierung des $\gamma$-Fe$_2$O$_3$ mit Co(OH)$_2$ beträgt die Reaktionstemperatur vorzugsweise 50 bis 100° C. Nach Beendigung der Hydroxidfällung wird der gesamte Feststoffanteil abfiltriert und solange mit Wasser gewaschen, bis das Waschwasser neutral reagiert. Der Filterkuchen wird dann im Vakuum bei Temperaturen von 10 bis 100° C getrocknet. Zur Erhöhung der koerzitivfeldstärke wird das Pigment bevorzugt unter Inertgas auf Temperaturen von 100 bis 300° C erhitzt. Diese Temperaturbehandlung führt in Anwesenheit von einer in Gegenwart von Eisenoxiden zersetzlichen organischen Verbindung zu besonders guten Resultaten. Dabei wird die organische Verbindung entweder bereits vor der Fällung der Me(II)-Hydroxide zum $\gamma$-Fe$_2$O$_3$ oder erst nach der Trocknung dem kobalthaltigen $\gamma$-Fe$_2$O$_3$ zugegeben, bei letzterem Verfahren vorzugsweise durch Sättigen der Inertgasatmosphäre mit dem Dampf niedrigsiedender, organischer Verbindungen. Die einzusetzenden Co(II)-und Fe(II)-Mengen und die Temperbedingungen, die die Koerzitivkraft bestimmen, richten sich nach den jeweiligen Anwendungen.

Die erfindungsgemäß hergestellten kobalthaltigen Eisenoxiden eignen sich in hervorragender Weise als magnetisches Material für magnetische Aufzeichnungsträger, insbesondere für die Speicherung von Videosignalen, aber auch für Audio- und Datenmedien. Sie zeigen eine ausgezeichnete Dispergierbarkeit mit besonders kurzen Dispergierzeiten und eine hervorragende Homogenität der Dispersion sowie die der daraus hergestellten magnetischen Aufzeichnungsträger. Gegenüber den nach dem Stand der Technik auf Basis von PO$_4{}^{3-}$-haltigem Goethit bzw. undotiertem Lepidokrokit hergestellten nadelförmigen Eisenoxide lassen sich mit denen gemäß der Erfindung u.a. deutlich bessere Video-Störabstandswerte erreichen.

Die Herstellung der magnetischen Aufzeichnungsträger erfolgt in an sich bekannter Weise. Hierzu wird das Eisenoxidpigment zusammen mit den üblichen Zusatzstoffen, wie Dispergierhilfsmittel, wie Natriumoleat, Zinkoleat, Natrium-laurat, -palmitat, -stearat, sowie gegebenenfalls den nichtmagnetischen Füllstoffen, wie Quarzmehl, Pulver auf Silikatbasis, Aluminiumoxid, Zirkonoxid und den in organischen Lösungsmitteln gelösten Bindemitteln wie elastomere Polyurethane, Epoxyharz, Vinylchlorid-Vinylacetat-Copolymere, mit polyfunktionellen Isocyanaten vernetzte OH-Gruppen-haltige Polyurethane sowie Mischungen davon in einer Dispergiereinrichtung, wie einer Topf- und Rührwerksmühle, zu einer Dispersion verarbeitet. Die Magnetpigmentdispersion wird anschließend mit Hilfe üblicher Beschichtungsmaschinen auf den nichtmagnetischen Träger aufgebracht. Als nichtmagnetische Träger lassen sich die üblichen Trägermaterialien verwenden, insbesondere Folien aus linearen Polyestern, wie Polyethylenterephthalat, in Stärken von 4 bis 20 $\mu$m. Bevor die noch flüssige Beschichtungsmischung auf dem Träger getrocknet wird, werden die anisotropen Magnetteilchen durch die Einwirkung eines Magnetfeldes entlang der vorgesehenen Aufzeichnungsrichtung orientiert. Anschließend werden die Magnetschichten durch Hindurchführen zwischen geheizten und polierten Walzen, geglättet und verdichtet. Die Dicke der Magnetschicht beträgt im allgemeinen 2 bis 6 $\mu$m.

Anhand der folgenden Beispiele wird das erfindungsgemäße Verfahren näher erläutert und mit Vergleichsversuchen zum Stand der Technik in Beziehung gesetzt. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, H$_c$, gemessen in (kA/m), wurden bei den Pulvermessungen auf eine Stopfdichte von $\rho$ = 1,2 g/cm$^3$ bezogen. Spezifische Remanenz (M$_r$/$\rho$) und Sättigung (M$_m$/$\rho$) sind jeweils in (nTm$^3$/g) angegeben.

Die spezifische Oberfläche SN$_2$ der Pigmente wird nach BET in m$^2$/g bestimmt, d.h. an gewogenen evakuierten, gasfreien Pigmentproben wird Stickstoff adsorbiert. Die Differenzmenge Stickstoff vor und nach Adsorption wird in belegte Fläche umgerechnet und ins Verhältnis zur Einwaage gesetzt. Die Messung entspricht DIN 66 132 nach dem Einpunkt-Differenz-verfahren nach Maul und Dümbgen.

Der Videostörabstand (Luminanz), das Verhältnis des Luminanzsignals eines 100% Weißbildes zum Rauschpegel, wurde mit dem Störspannungsmesser UPSF der Firma Rohde und Schwarz (> 100 kHz) gemessen.

Beispiel I.1

In einem 1000 l-Metallkessel mit Rührer, Temperatur- und pH-Regelung, Luft- und Stickstoffeinleitungen wurden 441 l Wasser, 129,6 l einer technischen 30,3 gew.%igen FeCl$_2$-Lösung unter Rühren und Stickstoffeinleitung vorgelegt und 127,6 ml einer 85%igen H$_3$PO$_4$, entsprechend 0,5 Gew.%, bezogen auf theoretische Ausbeute an $\gamma$-FeOOH, welche zuvor in 1 l Wasser gelöst wurde, hinzugefügt. Danach betrug der pH-Wert der Lösung 2,1, die Temperatur wurde auf 20° C geregelt. Nun wurden innerhalb 3 Minuten mit einer Pumpe 95 l einer 15,2 % technischen Natronlauge, entsprechend einem Ausfällgrad von 50 % Fe-(II), eingebracht und danach die wäßrige Fe(OH)$_2$-Suspension für 10 Minuten unter Rühren und weiterem Einleiten erneut auf 20° C abgekühlt. Nun wurde unter Rühren und Beibehaltung von 20° C der N$_2$-

Gasstrom durch einen Luftstrom ersetzt. Nach 80 Minuten war die Keimbildung abgeschlossen. Die orangegefärbte Keimsuspension wies einen pH-Wert von 3,5 auf. Nun wurde unter Beibehaltung der übrigen Bedingungen von 20°C auf 32°C erwärmt und durch Zudosierung einer wäßrigen 15%igen Natronlauge mittels automatischer pH-Regelung bei einem pH von 5,2 bis 5,4 innerhalb 465 min der Wachstumsprozeß durchgeführt. Die auf 20°C abgekühlte γ-FeOOH-Suspension wurde dann auf einer Filterpresse filtriert und mit Wasser auf Chloridfreiheit im Filtrat gewaschen. Der Filterkuchen wurde bei 130°C in einem Umlufttrockenschrank getrocknet. Die BET-Oberflächenwerte sind in Tabelle 1 angegeben.

Beispiel I.2

In einem 5 l-Glasgefäß, versehen mit Rückflußkühler, Temperatur- und pH-Regelung und Rührer, wurden 279 g technisches $FeCl_2$, entsprechend 674 ml einer 30,7 Gew.% Lösung, mit 2326 ml Wasser versetzt. Unter Einleiten von 200 Nl Stickstoff/h wurden 500 ml einer 15,1 % Natronlauge hinzugefügt und die erhaltene $Fe(OH)_2$-Suspension 10 Minuten nachgerührt. Danach wurden bei 20°C anstelle von Stickstoff Luft eingeleitet, um die γ-FeOOH-Keimbildung zu starten. Nach 75 Minuten Dauer und bei einem Suspensions-pH-Wert von 6,0 wurden 0,67 ml einer 85 %igen $H_3PO_4$ hinzugegeben. Nach weiteren 100 Minuten, d.h. nach einer Gesamtzeit von 175 Minuten war der pH unter einen Wert von 4 gefallen, die γ-FeOOH-Keimbildung damit beendet. Nun wurde auf 40°C erwärmt und unter weiterem Rühren und Lufteinleiten durch pH-geregelte Zudosierung einer 15 %igen Natronlauge bei einem pH-Wert von 5,2 innerhalb 305 min der Wachstumsprozeß durchgeführt. Das γ-FeOOH wurde danach abfiltriert, mit Wasser auf Chloridfreiheit im Filtrat gewaschen und in einem Vakuumtrockenschrank bei 80°C getrocknet. Die Ergebnisse sind in Tabelle 1 angegeben.

Beispiel I.3

In einem Kessel mit 51 m³ Nutzvolumen, versehen mit Rührer, Temperatur-und pH-Regelung und Lufteinleitung, wurden 24 m³ Wasser, 6,95 m³ 30,5 %ige Eisen(II)-chloridlösung und 12,1 kg 62 %ige Phosphorsäure vorgelegt. Unter Rühren wurden innerhalb von 30 min bei einer Temperatur von 20 bis 22°C 5,4 m³ NaOH hinzugefügt und anschließend 3000 Nm³ Luft/h eingeleitet. Nach 300 min war die Keimbildung beendet. Der pH-Wert der orangegefärbten Suspension betrug 2,8. Nach Erhöhen der Temperatur auf 35°C wurde unter weiterer Lufteinleitung pH-geregelt bei pH 5,3 innerhalb von 270 min 5,4 m³ 14,9 %ige NaOH zugeführt. Am Ende der Wachstumsphase wurden der Reaktionsmischung 11,4 kg $SnCl_2 . H_2O$, gelöst in Wasser, zugesetzt und der pH auf 8,0 eingestellt. Anschließend wurde die Suspension unter Rühren 2 h umgepumpt.

Die Hälfte der γ-FeOOH-Suspension wurde auf einer Filterpresse filtriert, der Feststoff mit Wasser bis zu einem pH von 7 gewaschen. Die Trocknung erfolgte bei 160°C an Luft (Teil I.3 A).

Die andere Hälfte der Suspension wird mit 30 l Olivenöl versetzt, auf 50°C erhitzt und weitere 2 h gerührt. Die Aufarbeitung erfolgt wie für Teil I.3 A beschrieben (Teil I.3 B).

Die Ergebnisse sind in Tabelle 1 angegeben.

Beispiel I.4

Es wurde wie in Beispiel I.3 A beschrieben verfahren, jedoch mit dem Unterschied, daß nur 7,3 kg 62 %ige Phosphorsäure vorgelegt wurden.

Die Ergebnisse sind in Tabelle 1 angegeben.

Vergleichsbeispiel I.5

Es wurde wie in Beispiel I.3 A beschrieben verfahren, jedoch mit dem Unterschied, daß keine Phosphorsäure vorgelegt wurde. Die Ergebnisse sind in Tabelle 1 angegeben.

Vergleichsbeispiel I.6

In einem 250 l-Metallkessel, versehen mit Rührer, Temperatur- und pH-Regelung, Luft- und Stickstoffeinleitungen, wurden 18,5 l 31 %ige $FeCl_2$-Lösung und 64,5 l Wasser unter Rühren und Stickstoffeinleitung vorgelegt. Innerhalb von 10 min wurden 23 l 10 %ige NaOH bei einer Temperatur von 20°C zugeführt. Anschließend wurde unter Beibehalt der übrigen Bedingungen der $N_2$-Gasstrom durch einen Luftstrom ersetzt. Nach 40 min war die Keimbildung abgeschlossen. Nun wurde auf 40°C aufgeheizt und danach pH-geregelt bei einem pH von 5,5 im Laufe von 50 min 48 l 5 %ige NaOH zudosiert. Die orangegefärbte Suspension wurde auf einer Druckfilternutsche filtriert und der Filterkuchen mit Wasser gewaschen bis das Filtrat chloridfrei war. Die Trocknung erfolgte bei 100 °C im Vakuumtrockenschrank. Die Ergebnisse sind in Tabelle 1 angegeben.

Beispiel I.7

In einem 10 l-Glasgefäß, versehen mit Rückflußkühler, Temperatur- und pH-Regelung und Rührer, wurden 558 g technisches $FeCl_2$, entsprechend 1395 ml einer 29,9 gew.%igen Lösung, und 1,34 ml einer 85 %igen Phosphorsäure, entsprechend 0,5 Gew.%, bezogen auf theoretische Ausbeute an $\gamma$-FeOOH, vorgelegt. Danach wurde die Lösung durch Zugabe von Wasser auf ein Gesamtvolumen von 6 l gebracht. Unter Einleiten von Stickstoff wurden 1000 ml einer 1,5 %igen Natronlauge innerhalb 5 Minuten hinzugefügt und die erhaltene $Fe(OH)_2$-Suspension 10 Minuten nachgerührt. Anschließend wurde bei 20 °C anstelle von Stickstoff Luft eingeleitet bis nach 70 Minuten der pH-Wert der Suspension auf 4 abgefallen war. Nun wurde auf 40 °C erwärmt und unter weiterem Rühren und Lufteinleiten durch pH-geregelte Zudosierung einer 15 %igen Natronlauge bei einem pH-Wert von 5,1 innerhalb 330 Minuten der Wachstumsprozeß durchgeführt. Dann wurde durch Zugabe von Oxalsäure ($H_2C_2O_4$ . $2 H_2O$) ein pH-Wert von 4,5 eingestellt, 10 Minuten nachgerührt und 0,8 Gew.% $PO_4^{3-}$, bezogen auf $\gamma$-FeOOH in Form einer 85 %igen $H_3PO_4$ hinzugefügt. Nun wurde nochmals 10 Minuten nachgerührt und das $\gamma$-FeOOH gemäß Beispiel I.2 aufgearbeitet. Die Ergebnisse sind in Tabelle 1 angegeben.

Vergleichsbeispiel I.8

In einem 250 l Metallkessel, versehen mit Rührer, Temperatur- und pH-Regelung, Luft- und Stickstoffeinleitungen, wurden 25,7 kg Fe(II)SO$_4$ . $7 H_2O$ 126 l Wasser, 70 l $H_2SO_4$ (98 %) und 115,6 g $NaH_2PO_4$ . $2 H_2O$ unter Rühren und Stickstoffeinleitung vorgelegt. Nach Erhitzen auf 50 °C wurden innerhalb von 15 min 31 l 15 %ige NaOH zugeführt. Bei 50 °C wurde nun Luft eingeleitet. Nach 135 min war die Keimbildung beendet. Anschließend wurde unter Beibehaltung der übrigen Bedingungen pH-geregelt bei pH 5,5 15 l 15 %ige NaOH im Laufe von 100 min zudosiert. Die gelbgefärbte Suspension wurde danach auf einer Druckfilternutsche filtriert und der Filterkuchen mit Wasser gewaschen, bis das Filtrat $SO_4^{2-}$-frei war. Die Trocknung erfolgte bei 100 °C im Vakuumtrockenschrank. Die Ergebnisse des resultierenden $\alpha$-FeOOH sind in Tabelle 1 angegeben.

Vergleichsbeispiel 1.9

Es wurde wie bei Beispiel 1.8 beschrieben verfahren, jedoch mit der folgenden Unterschieden:
Es wurden 36,0 kg FeSO$_4$ . $7 H_2O$, 96 ml $H_2SO_4$ (98 %) und 161,8 g $NaH_2PO_4$ . $2 H_2O$ in 130 l Wasser vorgelegt. Zur $Fe(OH)_2$-Fällung vor Beginn der Keimphase wurden 9,5 l 50 %ige NaOH eingesetzt. Während der Wachstumsphase wurden 19 l 15 %ige NaOH zudosiert. Die Ergebnisse des resultierenden $\alpha$-FeOOH sind in Tabelle 1 angegeben.

Tabelle 1

| FeOOH Beispiel | Mod. | SN$_2$ (m$^2$/g) | Dotierung |
|:---:|:---:|:---:|:---|
| I.1 | $\gamma$ | 38,5 | 0.5 % $PO_4^{3-}$ |
| I.2 | $\gamma$ | 28,7 | 0.42 % $PO_4^{3-}$ |
| I.3 | $\gamma$ | 36,9 | 0,5 % $PO_4^{3-}$, 0,3 % $Sn^{2+}$ |
| I.4 | $\gamma$ | 32,1 | 0,3 % $PO_4^{3-}$, 0,3 % $Sn^{2+}$ |
| I.5 (v) | $\gamma$ | 30,1 | 0,3 % $Sn^{2+}$ |
| I.6 (v) | $\gamma$ | 35,5 | - ohne - |
| I.7 | $\gamma$ | | 0.5 % $PO_4^{3-}$ |
| I.8 (v) | $\alpha$ | 51,2 | 0,75 % $PO_4^{3-}$ |
| I.9 (v) | $\alpha$ | 39,8 | 0,8 % $PO_4^{3-}$ |

Beispiel II.1

Das in Beispiel I.1 hergestellte $\gamma$-FeOOH wurde in einem kontinuierlich betriebenen Drehrohrofen in einem Stickstoffstrom innerhalb 30 Minuten bei 420° C zu $Fe_2O_3$ entwässert und getempert.

Anschließend wurde das $Fe_2O_3$ mit 2,5 Gew.% Stearinsäure, bezogen auf $Fe_2O_3$, gemischt und in einem Ofen gleicher Bauart innerhalb 30 Minuten bei 380° C in einem Gasstrom bestehend aus gleichen Teilen Wasserstoff und Stickstoff zu $Fe_3O_4$ reduziert. Vor dem Eintritt in das Reduktionsrohr wurde das $H_2/N_2$-Gasgemisch durch Wasser einer Temperatur von 60° C hindurchgeleitet. Nach beendeter Reduktion wurde die Magnetitprobe in einem Ofen gleicher Bauart innerhalb 30 Minuten bei 280° C in einem Luftstrom zu $\gamma$-$Fe_2O_3$ oxidiert. Die Ergebnisse sind in Tabelle 2 angegeben.

Beispiel II.2

Weitere Teile des nach Beispiel I.1 hergestellten $\gamma$-FeOOH wurden wie im Beispiel II.1 beschrieben, jedoch in einem diskontinuierlichen Drehrohrofen zu $\gamma$-$Fe_2O_3$ umgewandelt, jedoch betrug die Reduktionstemperatur 60° C. Die Ergebnisse sind in Tabelle 2 angegeben.

Beispiel II.3

In einem kontinuierlichen Ofen mit drei Heizzonen wurden 20 kg $\gamma$-FeOOH aus Beispiel I.1 im Stickstoffstrom innerhalb 30 Minuten zu $Fe_2O_3$ umgewandelt. Die drei Heizzonen wurden dabei auf Temperaturen von 310, 400 und 420° C gehalten.

Danach wurde das $Fe_2O_3$ mit 2,5 Gew.% Stearinsäure, bezogen auf $Fe_2O_3$, gemischt und im selben Ofen bei Temperaturen von 270, 375 und 380° C in einem Gasgemisch von 1,25 $Nm^3/h$ Wasserstoff und 1,75 $Nm^3/h$ Stickstoff innerhalb 30 Minuten zu $Fe_3O_4$ reduziert.

Die Oxidation zu $\gamma$-$Fe_2O_3$ erfolgte innerhalb 30 Minuten im gleichen Ofen in einem Gemisch aus 3,25 $Nm^3/h$ Luft und 0,25 $Nm^3/h$ Stickstoff. Dazu wurden alle drei Heizzonen auf 280° C gehalten. Die Ergebnisse sind in Tabelle 2 angegeben.

Beispiel II.4

180 g $\gamma$-FeOOH des Beispiels I.1 wurden mit 2,5 Gew.% eines hochmolekularen Polyethylens (MG 250 000) gemischt und innerhalb 30 Minuten bei 450° C in einem Stickstoffstrom in einem diskontinuierlichen Drehrohrofen zu $Fe_3O_4$ reduziert und danach in einem Ofen gleicher Bauart bei 280° C innerhalb von 30 Minuten mit Luft zu $\gamma$-$Fe_2O_3$ oxidiert. Die Ergebnisse sind in Tabelle 2 angegeben.

Vergleichsbeispiel II.5

Das im Beispiel I.1 hergestellte $\gamma$-FeOOH wurde in einem diskontinuierlichen Drehrohrofen wie im Beispiel II.2 beschrieben zu $Fe_2O_3$ entwässert und getempert. Das $Fe_2O_3$ wurde dann in einem Ofen gleicher Bauart innerhalb 30 Minuten bei 380° C im Wasserstoffgasstrom zu $Fe_3O_4$ reduziert. Vor dem Eintritt in das Reduktionsrohr wurde der $H_2$-Strom durch 60° C warmes Wasser geleitet. Das $Fe_3O_4$ wurde in einem weiteren Ofen gleicher Bauart zu $\gamma$-$Fe_2O_3$ oxidiert. Die Ergebnisse sind in Tabelle 2 angegeben.

Vergleichsbeispiel II.6

Das in Beispiel I.1 hergestellte $\gamma$-FeOOH wurde direkt wie in Beispiel II.5 beschrieben zu $Fe_3O_4$ reduziert und zu $\gamma$-$Fe_2O_3$ oxidiert. Die Ergebnisse sind in Tabelle 2 angegeben.

Beispiel II.7

Das in Beispiel I.2 hergestellte $\gamma$-FeOOH wurde in einem diskontinuierlichen Drehrohrofen in einem Stickstoffstrom innerhalb 30 Minuten bei 420° C zu $Fe_2O_3$ entwässert und getempert.

Anschließend wurde das $Fe_2O_3$ mit 2,5 Gew.% Stearinsäure, bezogen auf $Fe_2O_3$, gemischt und in einem Ofen gleicher Bauart innerhalb 30 Minuten bei 380° C in einem Gasstrom bestehend aus gleichen Teilen Wasserstoff und Stickstoff zu $Fe_3O_4$ reduziert. Vor dem Eintritt in das Reduktionsrohr wurde das $H_2/N_2$-Gasgemisch durch Wasser einer Temperatur von 60° C hindurchgeleitet. Nach beendeter Reduktion wurde die Magnetitprobe in einem Ofen gleicher Bauart innerhalb 30 Minuten bei 280° C in einem Luftstrom

7

zu $\gamma$-$Fe_2O_3$ oxidiert. Die Ergebnisse sind in Tabelle 2 angegeben.

Beispiel II.8

In einem kontinuierlichen Drehrohrofen wurde Teil 1.3 A des $\gamma$-FeOOH aus Beispiel I.3 in einem Stickstoffstrom entwässert. Die Temperaturen der drei Heizzonen betrugen 250 bis 330 bis 350°C, die Verweilzeit des Produkts 40 Minuten. Anschließend wurde das $\alpha$-$Fe_2O_3$ in einem weiteren Drehrohrofen mittels eines $N_2/H_2$-Gemisches und zudosierter Stearinsäure (2,5 Gew.%, bezogen auf $\alpha$-$Fe_2O_3$) zu $Fe_3O_4$ reduziert. Die Temperatur der drei Heizzonen betrug 330 bis 400 bis 440°C, die Verweilzeit 40 Minuten. In einem dritten Drehrohrofen erfolgte die Oxidation zu $\gamma$-$Fe_2O_3$ unter Durchleiten von Luft bei 250°C. Die Ergebnisse sind in Tabelle 2 angegeben.

Beispiel II.9

Teil 1.3 B des $\gamma$-FeOOH aus Beispiel I.3 wurden in einem kontinuierlichen Drehrohrofen bei Temperaturen der drei Heizzonen von 300 bis 415 bis 480°C mit Wasserstoff zu $Fe_3O_4$ reduziert. Die Verweilzeit war 40 Minuten. Die Oxidation zu $\gamma$-$Fe_2O_3$ erfolgte wie in Beispiel II.8 beschrieben. Die Ergebnisse sind in Tabelle 2 angegeben.

Beispiel II.10

Die Umwandlung des in Beispiel I.4 hergestellten $\gamma$-FeOOH zu $\gamma$-$Fe_2O_3$ erfolgte wie in Beispiel II.2 beschrieben, mit dem Unterschied, daß das $\gamma$-FeOOH bei 400°C entwässert wurde. Die Ergebnisse sind in Tabelle 2 angegeben.

Vergleichsbeispiel II.11

Die Umwandlung des $\gamma$-FeOOH aus Beispiel I.5 zu $\gamma$-$Fe_2O_3$ erfolgte wie in Beispiel II.8 beschrieben, mit dem Unterschied, daß die Temperaturen der drei Heizzonen bei der Entwässerung 250 bis 350 bis 370°C betrugen. Die Ergebnisse sind in Tabelle 2 angegeben.

Vergleichsbeispiel II.12

$\gamma$-FeOOH aus Beispiel I.6 wurde in einem kontinuierlichen Drehrohrofen unter Stickstoffatmosphäre bei 380°C und einer Verweilzeit von 30 Minuten entwässert. Das erhaltene $\alpha$-$Fe_2O_3$ wurde mit 2,5 Gew.% Stearinsäure gemischt und anschließend in Stickstoff-Wasserstoff-Atmosphäre zu $Fe_3O_4$ bei 360°C reduziert. Die Oxidation des $Fe_3O_4$ erfolgte ebenfalls kontinuierlich bei 280°C in einem Luftstrom. Die Ergebnisse sind in Tabelle 2 angegeben.

Beispiel II.13

200 g des in Beispiel I.7 hergestellten $\gamma$-FeOOH wurden in einem diskontinuierlichen Drehrohrofen in einem Stickstoffstrom innerhalb einer Stunde bei 600°C zu $Fe_2O_3$ entwässert und getempert. Anschließend wurde das $Fe_2O_3$ mit 2,5 Gew.% Stearinsäure, bezogen auf $Fe_2O_3$, gemischt und in einem Ofen gleicher Bauart innerhalb 30 Minuten bei 430°C in einem bei 60°C mit Wasserdampf gesättigten Gasstrom aus gleichen Teilen Wasserstoff und Stickstoff, zu $Fe_2O_3$ reduziert. Anschließend wurde die Magnetitprobe bei 280°C innerhalb 30 Minuten in einem Luftstrom zu $\gamma$-$Fe_2O_3$ oxidiert. Die Ergebnisse sind in Tabelle 2 angegeben.

Vergleichsbeispiel II.14

2,5 kg $\alpha$-FeOOH aus Beispiel I.8 wurden wie unter II.12 beschrieben zu $\gamma$-$Fe_2O_3$ umgewandelt, mit dem Unterschied, daß Entwässerungs-bzw. Reduktionstemperatur 650°C bzw. 400°C betrugen. Die Ergebnisse sind in Tabelle 2 angegeben.

Vergleichsbeispiel II.15

2,5 kg $\alpha$-FeOOH aus Beispiel I.9 wurden wie unter II.12 beschrieben zu $\gamma$-$Fe_2O_3$ umgewandelt, mit dem

EP 0 201 822 B1

Unterschied, daß die Entwässerung bei 700°C an Luft und die Reduktion bei einem aus gleichen Teilen Stickstoff und Wasserstoff bestehenden Gemisch durchgeführt wurde. Die Ergebnisse sind in Tabelle 2 angegeben.

Beispiel II.16

Ein gemäß Beispiel I.4 hergestelltes $\gamma$-FeOOH wurde wie für Beispiel II.2 beschrieben zu $\gamma$-Fe$_2$O$_3$ umgewandelt, mit dem Unterschied, daß die Entwässerungstemperatur 370°C und die Reduktionstemperatur 400°C betrug. Die Ergebnisse sind in Tabelle 2 angegeben.

Beispiel III.1

In einem thermostatisierbaren Glasgefäß wurden unter Stickstoffeinleitung 145,35 g CoCl$_2$ . 6 H$_2$O in 4,8 l Wasser gelöst und unter intensivem Rühren 1,2 kg Fe$_2$O$_3$ aus Beispiel II.1 suspendiert. Dann wurde 15 %ige Natronlauge hinzugefügt bis ein pH-Wert von 12,6 erreicht wurde. Nach einstündigem intensiven Weiterrühren wurden 420 ml einer 30,8 %igen FeCl$_2$-Lösung zugegeben und der Gefäßinhalt noch weitere 6 Stunden intensiv gerührt. Während der gesamten Prozedur wurde eine Temperatur um 50°C aufrechterhalten und der gesamte Gefäßinhalt durch Stickstoffeinleitung bzw. Abdeckung inertisiert. Nach dem Abkühlen der Suspension unter Aufrechterhaltung der Inertisierung wurde filtriert, der Filterkuchen mit Wasser gewaschen bis das Filtrat neutral reagierte. Anschließend wurde der Filterkuchen bei 80°C im Vakuum getrocknet. Das Produkt wurde dann in einem Drehrohrofen bei 260°C 10 Minuten lang durch Überleiten eines mit Alkoholdampf beladenen Stickstoffstromes nachbehandelt. Die Ergebnisse sind in Tabelle 2 angegeben.

Beispiel III.2

Es wurde wie in Beispiel III.1 beschrieben verfahren, jedoch wurde als Einsatzprodukt das $\gamma$-Fe$_2$O$_3$ aus Beispiel II.2 eingesetzt und 193,8 g CoCl$_2$ . 6 H$_2$O und 750 ml einer 30,3 %igen FeCl$_2$-Lösung verwendet. Die abschließende Behandlung erfolgte im Drehrohrofen bei 135°C in einem Stickstoffstrom 2 Stunden lang. Die Ergebnisse sind in Tabelle 2 angegeben.

Beispiel III.3

Es wurde wie in Beispiel III.2 beschrieben verfahren, jedoch wurde als Ausgangsmaterial das Produkt von Beispiel II.3 eingesetzt und die Nachbehandlung erfolgte bei 160°C. Die Ergebnisse sind in Tabelle 2 angegeben.

Beispiel III.4

Es wurde wie in Beispiel III.2 beschrieben verfahren, wobei als Ausgangsmaterial das Produkt aus Beispiel II.4 eingesetzt wurde und die Nachbehandlung unter Stickstoff bei 180°C erfolgte. Die Ergebnisse sind in Tabelle 2 angegeben.

Beispiel III.4 A

Es wurde wie in Beispiel III.1 beschrieben verfahren, jedoch wurde zu dem suspendierten Eisenoxid aus Beispiel II.4 neben dem Kobaltchlorid noch 3,93 ml Olivenöl eingesetzt. Die Ergebnisse sind in Tabelle 2 angegeben.

Vergleichsbeispiel III.5

Das nach Beispiel II.5 hergestellte Eisenoxid wurde wie in Beispiel III.2 beschrieben mit 4 Gew.% Kobalt und 12 Gew.% zweiwertigem Eisen modifiziert. Die Ergebnisse sind in Tabelle 2 angegeben.

Vergleichsbeispiel III.6

Mit dem nach Beispiel II.6 hergestellten Eisenoxid wurde entsprechend Vergleichsbeispiel III.5 verfahren. Die Ergebnisse sind in Tabelle 2 angegeben.

9

### Beispiel III.7

Unter Einsatz des Eisenoxid aus Beispiel II.7 wurde wie in Beispiel III.2 beschrieben, verfahren. Die Ergebnisse sind in Tabelle 2 angegeben.

### Beispiel III.8

Das gemäß Beispiel II.8 hergestellte Eisenoxid wurde wie in Beispiel III.2 beschrieben modifiziert. Die Nachbehandlung erfolgte bei 140 °C. Die Ergebnisse sind in Tabelle 2 angegeben.

### Beispiel III.9

Das gemäß Beispiel II.9 hergestellte Eisenoxid wurde wie in Beispiel III.2 beschrieben modifiziert. Die Nachbehandlung erfolgte bei 175 °C. Die Ergebnisse sind in Tabelle 2 angegeben.

### Beispiel III.10

Das gemäß Beispiel II.10 hergestellte Eisenoxid wurde wie in Beispiel III.2 beschrieben modifiziert, jedoch erfolgte keine Nachbehandlung. Die Ergebnisse sind in Tabelle 2 angegeben.

### Vergleichsbeispiel III.11

Es wurde wie in Beispiel III.10 beschrieben verfahren, jedoch wurde das Eisenoxid von Beispiel II.11 eingesetzt. Die Ergebnisse sind in Tabelle 2 angegeben.

### Vergleichsbeispiel III.12

Das gemäß Beispiel II.12 hergestellte Eisenoxid wurde entsprechend Beispiel III.10 umgewandelt. Die Ergebnisse sind in Tabelle 2 angegeben.

### Beispiel III.13

Unter intensivem Rühren und Inertisierung des Reaktionsgefäßes mit Stickstoff während der gesamten Reaktionsdauer wurden 60 g des nach Beispiel II.13 erhaltenen Eisenoxids in 300 ml Wasser unter Zusatz von 4 Gew.% Co als $CoCl_2$ . 6 $H_2O$ dispergiert und nach 30 Minuten Dauer eine Temperatur von 50 °C eingestellt. Dann wurden 38 ml einer 31,3 %igen $FeCl_2$-Lösung, entsprechend 12 Gew.% Fe(II), bezogen auf Co-$\gamma$-$Fe_2O_3$, hinzugefügt und 10 Minuten später noch 50 ml einer 50 %igen wäßrigen Natronlauge eingebracht. Nach sechsstündigem Rühren bei 50 °C wurde auf 22 °C abgekühlt, filtriert, mit Wasser gewaschen und der Filterkuchen im Vakuumtrockenschrank bei 80 °C getrocknet und anschließend in einem Stickstoffstrom bei 180 °C 2 Stunden lang nachbehandelt. Die Ergebnisse sind in Tabelle 2 angegeben.

### Vergleichsbeispiel III.14

Das gemäß Beispiel II.14 hergestellte Eisenoxid wurde entsprechend Beispiel III.10 behandelt. Die Ergebnisse sind in Tabelle 2 angegeben.

### Vergleichsbeispiel III.15

Das gemäß Beispiel II.15 hergestellte Eisenoxid wurde wie in Beispiel III.2 beschrieben modifiziert und bei 180 °C unter Stickstoff nachbehandelt. Die Ergebnisse sind in Tabelle 2 angegeben.

### Beispiel III.16

In einem thermostatisierbaren Glasgefäß wurden 4,03 g $CoCl_2$ . 6 $H_2O$ in 500 ml Wasser gelöst, unter intensivem Rühren 100 g $\gamma$-$Fe_2O_3$ aus Beispiel II.16 suspendiert und innerhalb von 30 min die Temperatur auf 90 °C erhöht. Anschließend wurden 7 ml 50 %ige NaOH zugetropft und die Suspension 4 h bei 90 °C weitergerührt. Nach dem Abkühlen der Suspension wurde filtriert und der Filterkuchen mit Wasser gewaschen, bis das Filtrat neutral reagierte. Nach Trocknung bei 100°C an Luft wurde das Produkt 2 h bei 220°C unter Stickstoffatmosphäre getempert. Die Ergebnisse sind in Tabelle 2 angegeben.

Vergleichsbeispiel III.17

Ein gemäß Beispiel II.11 hergestelltes Eisenoxid wird wie in Beispiel III.16 beschrieben modifiziert. Die Ergebnisse sind in Tabelle 2 angegeben.

Beispiele IV.1 bis 15

640 Teile einer 12,5 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan sowie 100 Teilen einer 20 %igen Lösung eines Phenoxyharzes aus Bisphenol A und Epichlorhydrin im gleichen Lösungsmittelgemisch werden mit 810 Teilen eines cobaltmodifizierten Gamma-Eisen(III)oxids aus den Beispielen III.1 bis III.15, 2,25 Teilen Natriumoleat, 27 Teilen Aluminiumoxid, 90 Teilen eines Chromdioxids mit einer Koerzitivfeldstärke von 50 kA/m, 14 Teilen eines Vinylpyrrolidon-Vinylacetat-Copolymeren mit einem Molekulargewicht von 10 000 und weiteren 600 Teilen des genannten Lösungsmittelgemisches in einer 6 000 Volumenteile fassenden und mit 8 000 Teilen Stahlkugeln eines Durchmessers von 4 bis 6 mm gefüllten Kugelmühle 4 Tage lang dispergiert. Anschließend werden nochmals 640 Teile der genannten Polyesterurethanlösung und 100 Teile der Phenoxyharzlösung sowie 18 Teile Butylstearat, 4,5 Teile Stearinsäure und 400 Teile des genannten Lösungsmittelgemisches zugegeben und nochmals 24 Stunden dispergiert. Die erhaltene Dispersion wird unter Druck durch einen Filter mit 5 $\mu$m Poren filtriert und auf eine 14,5 $\mu$m dicke Polyethylenterephthalatfolie mittels eines üblichen Linealgießers aufgetragen. Die beschichtete Folie wird nach Durchlaufen eines Magnetfeldes zur Ausrichtung der magnetischen Teilchen bei Temperaturen zwischen 60 und 80°C getrocknet. Nach der Trocknung wird die Magnetschicht der beschichteten Folie durch zweimaliges Hindurchführen zwischen beheizten Walzen verdichtet und geglättet. Die Dicke der Magnetschicht beträgt dann 4 $\mu$m. Nach dem Schneiden der beschichteten Folien in 1/2 Zoll breite Videobänder wurden diese auf einem handelsüblichen VHS-Videorecorder der Firma Victor Company of Japan (JVC) geprüft und der Videostörabstand S/N (Luminanz) bestimmt. Die Ergebnisse sind in der Tabelle 2 angegeben.

Beispiel V.1

In einer mit 100 Teilen Stahlkugeln gefüllten Kugelmühle mit einem Füllvolumen von 250 Volumenteilen wurden 50 Teile des magnetischen Eisenoxids nach Beispiel III.16, 3 Teile eines langkettigen amphoteren, organophilen Dispergiermittels, 0,05 Teile eines Siliconöles und 0,5 Teile eines isomeren Carbonsäuregemisches mit einem Fließpunkt < 5°C, 6,6 Teile eines handelsüblichen isocyanatfreien Polyesterurethans aus Adipinsäure, Butandiol-1,4 und 4,4-Dicyanatodiphenylmethan mit einem K-Wert von 61 (gemessen als 1 %ige Lösung in Tetrahydrofuran) und 25 Teile eines Vinylchlorid-Maleinsäureethylester-Copolymeren mit einem K-Wert von 59 (ebenfalls als 1%ige Lösung in Tetrahydrofuran gemessen), sowie 78 Teile eines Gemisches aus gleichen Teilen von Tetrahydrofuran und 1,4-Dioxan zugegeben, wobei die Eingaben der angegebenen Bindemittel in Form ihrer Lösungen in dem genannten Lösemittelgemisch erfolgte. Nach einer Dispergierdauer von 2,5 Stunden wurde die Magnetdispersion filtriert und anschließend mit einer üblichen Beschichtungseinrichtung auf eine 12 $\mu$m dicke Polyethylenterephthalatfolie gegossen. Danach erfolgte die Trocknung in einem Trockenkanal und der Glättvorgang mit einem beheizten Mehrwalzenkalander. An der in 3,81 mm breite Bänder geschnittenen mit der Magnetschicht versehenen Folie wurden der Ruhegeräuschspannungsabstand ($RG_A$) und die Kopierdämpfung ($K_o$) nach DIN 45 512 Blatt 2 gegen das IEC I-Referenzband bestimmt.

$RG_A$ = + 0,6 dB

$K_o$ = + 0,6 dB

Beispiel V.2

Es wurde wie in Beispiel V.1 beschrieben verfahren, jedoch wurde als magnetisches Material das nach Beispiel III.17 erhaltene eingesetzt. Die Meßergebnisse waren:

$RG_A$ = - 0,3 dB

$K_o$ = + 3,5 dB.

11

Tabelle 2

γ-Fe2O3

| Beispiel | $S_{N_2}$ [m²/g] | $H_C$ [kA/m] | $M_r/\varrho$ [nTm³/g] | $M_m/\varrho$ [nTm³/g] |
|---|---|---|---|---|
| II.1 | 22,8 | 21,9 | 38 | 81 |
| II.2 | 22,3 | 20,2 | 38 | 80 |
| II.3 | 25,8 | 21,7 | 40 | 83 |
| II.4 | 26,3 | 23,4 | 39 | 81 |
| II.5 (V) | 16,0 | 22,2 | 40 | 85 |
| II.6 (V) | 18,0 | 23,1 | 41 | 85 |
| II.7 | 22,3 | 17,9 | 40 | 86 |
| II.8 | 24,9 | 22,3 | 40 | 81 |
| II.9 | 22,9 | 24,5 | 39 | 77 |
| II.10 | 21,4 | 25,9 | 44 | 83 |
| II.11 (V) | 21,0 | 27,6 | 42 | 85 |
| II.12 (V) | 21,9 | 24,6 | 37 | 81 |
| II.13 | 27,0 | 24,2 | 43 | 82 |
| II.14 (V) | 28,6 | 27,8 | 43 | 81 |
| II.15 (V) | 24,3 | 26,4 | 42 | 81 |
| II.16 | 20,8 | 26,4 | 40 | 77 |

Co-dot. γ-Fe2O3

| Beispiel | $S_{N_2}$ [m²/g] | $H_C$ [kA/m] | $M_r/\varrho$ [nTm³/g] | $M_m/\varrho$ [nTm³/g] | Videoband S/N- (Luminanz) [dB] |
|---|---|---|---|---|---|
| III.1 | 22,0 | 49,5 | 50 | 83 | 2,0 |
| III.2 | 22,6 | 46,1 | 46 | 81 | 1,4 |
| III.3 | 22,1 | 49,3 | 45 | 79 | 2,6 |
| III.4 | 22,2 | 49,1 | 45 | 78 | 2,4 |
| III.4 A | 23,8 | 49,5 | 45 | 77 | 2,4 |
| III.5 (V) | 16,5 | 49,6 | 50 | 84 | - 2,0 |
| III.6 (V) | 18,0 | 48,0 | 49 | 83 | - 2,0 |
| III.7 | 20,2 | 48,0 | 46 | 78 | 2,4 |
| III.8 | 17,2 | 49,2 | 46 | 85 | 0,8 |
| III.9 | 18,6 | 48,8 | 45 | 78 | 2,0 |
| III.10 | 18,7 | 51,5 | 46 | 81 | 1,2 |
| III.11 (V) | 15,1 | 51,5 | 46 | 82 | 0,2 |
| III.12 (V) | 20,0 | 48,5 | 48 | 86 | - 0,8 |
| III.13 | 23,6 | 57,3 | 57 | 84 | - |
| III.14 (V) | 25,9 | 48,2 | 49 | 86 | 0 |
| III.15 (V) | 19,1 | 56,3 | 49 | 82 | + 0,6 |
| III.16 | 19,8 | 30,9 | 42 | 81 | - |
| III.17 (V) | 20,4 | 34,3 | 41 | 79 | - |

**Patentansprüche**

1. Verfahren zur Herstellung von nadelförmigen, kobalthaltigen ferrimagnetischen Eisenoxiden, bei dem in einer ersten Stufe aus einer Eisen(II)salzlösung durch Zugabe von Alkalien unter gleichzeitiger Oxidation mittels Einleiten von Luft aus 25 bis 60 Mol-% der Eisen(II)ionen $\gamma$-FeOOH-Keime in Gegenwart von, bezogen auf die Menge an $\gamma$-FeOOH-Endprodukt, 0,2 bis 1,0 Gew.-% Phosphat-Ionen erzeugt werden und diese Keime dann in einer zweiten Stufe bei einer Temperatur von 20 bis 70°C unter Zugabe von weiterem Alkali und Einleiten von Luft bei einem pH-Wert zwischen 4 und 5,5 zum $\gamma$-FeOOH-Endprodukt weiterwachsen, dieses Endprodukt dann abfiltriert und gewaschen und bei Temperaturen zwischen 300 und 600°C entwässert sowie anschließend mittels in Gegenwart von an Eisenoxid zersetzlicher organischer Substanzen bei 350 bis 500°C zum Magnetit reduziert, mit sauerstoffhaltigen Gasen bei 250 bis 500°C zum Gamma-Eisen(III)oxid oxidiert und das resultierende Gamma-Eisen(III)-oxid duroh Auffällen von Kobalthydroxid, gegebenenfalls Eisen(II)hydroxidhaltig, in alkalischer Suspension bei einem pH-Wert von nicht kleiner 10 modifiziert, filtriert, getrocknet und bei 100 bis 300°C unter Inertgas getempert wird.

2. Verfahren zur Herstellung von nadelförmigen, kobalthaltigen ferrimagnetischen Eisenoxiden, bei dem in einer ersten Stufe aus einer Eisen(II)salzlösung durch Zugabe von Alkalien unter gleichzeitiger Oxidation mittels Einleiten von Luft aus 25 bis 60 Mol-% der Eisen(II)ionen $\gamma$-FeOOH-Keime in Gegenwart von, bezogen auf die Menge an $\gamma$-FeOOH-Endprodukt, 0,2 bis 1,0 Gew.-% Phosphat-Ionen erzeugt werden und diese Keime dann in einer zweiten Stufe bei einer Temperatur von 20 bis 70°C unter Zugabe von weiterem Alkali und Einleiten von Luft bei einem pH-Wert zwischen 4 und 5,5 zum $\gamma$-FeOOH-Endprodukt weiterwachsen, dieses Endprodukt dann abfiltriert und gewaschen und in Gegenwart von an Eisenoxid zersetzlicher organischer Substanzen bei Temperaturen zwischen 350 und 500°C entwässert und zum Magnetit reduziert, mit sauerstoffhaltigen Gasen bei 250 bis 500°C zum Gamma-Eisen(III)oxid oxidiert und das resultierende Gamma-Eisen(III)oxid durch Auffällen von Kobalthydroxid, gegebenenfalls Eisen(II)hydroxidhaltig, in alkalischer Suspension bei einem pH-Wert von nicht kleiner 10 modifiziert, filtriert, getrocknet und bei 100 bis 300°C unter Inertgas getempert wird.

3. Verfahren gemäß Anspruch 1 oder 2, dadurch gekennzeichnet, daß die Temperaturbehandlung des mit Eisen (II)- und Kobalthydroxid beaufschlagten Gamma-Eisen(III)oxid bei 100 bis 350°C in einer Atmosphäre aus einem Inertgas und einer bei dieser Temperatur in Gegenwart von Eisenoxid zersetzlichen organischen Verbindung vorgenommen wird.

4. Verfahren gemäß einem der Ansprüche 1 bis 3, dadurch gekennzeichnet, daß eine bei Temperaturen von 100 bis 350°C in Gegenwart von Eisenoxiden zersetzliche organische Substanz in der Suspension bei der Auffällung des Eisen (II)- und Kobalthydroxids auf das Gamma-Eisen(III)oxid zugegen ist.

**Claims**

1. A process for preparing an acicular cobalt-containing ferrimagnetic iron oxide wherein in a first stage an alkali is added to an iron(II) salt solution with simultaneous oxidation by introduction of air to produce from 25 to 60 mol% of the iron(II) ions $\gamma$-FeOOH nuclei in the presence of, based on the amount of $\gamma$-FeOOH end product, from 0.2 to 1.0% by weight of phosphate ions and these nuclei then grow in a second stage at from 20 to 70°C on addition of further alkali and introduction of air at a pH of from 4 to 5.5 into $\gamma$-FeOOH end product, this end product is then filtered off and washed and dehydrated at from 300 to 600°C and then, by means of an organic substance which is decomposable in the presence of iron oxide, reduced at from 350 to 500°C to magnetite, the magnetite is oxidized with an oxygen-containing gas at from 250 to 500°C to $\gamma$-iron(III) oxide, and the resulting $\gamma$-iron(III) oxide is modified by precipitating cobalt hydroxide, which may contain iron(II) hydroxide, onto it in an alkaline suspension at a pH of not less than 10, filtered, dried and heated at from 100 to 300°C under an inert gas.

2. A process for preparing an acicular cobalt-containing ferrimagnetic iron oxide wherein in a first stage an alkali is added to an iron(II) salt solution with simultaneous oxidation by introduction of air to produce from 25 to 60 mol% of the iron(II) ions $\gamma$-FeOOH nuclei in the presence of, based on the amount of $\gamma$-FeOOH end product, from 0.2 to 1.0% by weight of phosphate ions and these nuclei then grow in a second stage at from 20 to 70°C on addition of further alkali and introduction of air at a pH of from 4 to 5.5 into $\gamma$-FeOOH end product, this end product is then filtered off and washed and dehydrated at from 350 to 500°C in the presence of an organic substance which is decomposable in the presence of iron oxide and reduced to magnetite, the magnetite is oxidized with an oxygen-containing gas at from 250 to 500°C to $\gamma$-iron(III) oxide, and the resulting $\gamma$-iron(III) oxide is modified by precipitating cobalt hydroxide, which may contain iron(II) hydroxide, onto it in an alkaline suspension at a pH of not less than 10, filtered, dried and heated at from 100 to 300° C under an inert gas.

3. A process as claimed in claim 1 or 2, wherein the heat treatment of the gamma-iron(III) oxide doped with iron(II) hydroxide and cobalt hydroxide is carried out at 100-350° C in an atmosphere composed of an inert gas and an organic compound which is decomposable at that temperature in the presence of iron oxide.

4. A process as claimed in claims 1 to 3, wherein an organic substance which is decomposable at 100-350° C in the presence of iron oxides is present in the suspension in the course of the precipitation of iron(II) hydroxide and cobalt hydroxide onto the gamma-iron(III) oxide.

**Revendications**

1. Procédé de préparation d'oxydes de fer aciculaires ferrimagnétiques, contenant du cobalt, dans lequel, dans un premier stade, on produit à partir d'une solution de sel de fer-(II), par addition d'alcalis, avec oxydation simultanée par introduction d'air, à partir de 25 à 60 % (moles) des ions fer-(II) des germes de $\gamma$ -FeOOH en présence de, rapporté à la quantité de produit final $\gamma$ -FeOOH, 0,2 à 1,0 % en poids d'ions phosphate, ces germes continuant alors à croître dans un deuxième stade, à une température de 20 à 70 degrés C, avec addition d'autres quantités d'alcali et amenée d'air, à un pH compris entre 4 et 5,5, on sépare ensuite par filtration le produit final $\gamma$ -FeOOH résultant, on le lave, on le déshydrate à des températures comprises entre 300 et 600 degrés 6, ensuite on le réduit en magnétite entre 350 et 500 degrés C, en présence de substances organiques décomposables au contact d'oxyde de fer, on l'oxyde entre 250 et 500 degrés C avec des gaz oxygénés et on modifie l'oxyde de gamma-fer-(III) résultant en y précipitant, en suspension alcaline, a un pH non inférieur à 10, de l'hydroxyde de cobalt contenant éventuellement de l'hydroxyde de fer-(II), on filtre, on sèche et on soumet à un traitement thermique compris entre 100 et 300 degrés C, en atmosphère d'un gaz inerte.

2. Procédé de préparation d'oxydes de fer aciculaires ferrimagnétiques, contenant du cobalt, dans lequel, dans un premier stade, on produit à partir d'une solution de sel de fer-(II), par addition d'alcalis, avec oxydation simultanée par introduction d'air, à partir de 25 à 60 % (moles) des ions fer-(II) des germes de $\gamma$ -FeOOH en présence de, rapporté à la quantité de produit final $\gamma$ -FeOOH, 0,2 à 1,0 % en poids d'ions phosphate, ces germes continuant alors à croître dans un deuxième stade, à une température de 20 à 70 degré C, avec addition d'autres quantités d'alcali et amenée d'air, à un pH compris entre 4 et 5,5, on sépare ensuite par filtration le produit final $\gamma$ -FeOOH résultant, on le lave, on le déshydrate à des températures comprises entre 350 et 500 degrés C en présence de substances organiques décomposables au contact d'oxyde de fer, et on le réduit en magnétite, on l'oxyde entre 250 et 500 degrés C, avec des gaz oxygénés, en oxyde de gamma-fer-(III) et on modifie celui-ci, en y précipitant en solution alcaline, à un pH non inférieur à 10, de l'hydroxyde de cobalt contenant éventuellement de l'hydroxyde de fer-II, on filtre, on sèche et on soumet à un traitement thermique compris entre 100 et 300 degrés C, en atmosphère d'un gaz inerte.

3. Procédé selon l'une des revendications 1 ou 2, caractérisé par le fait que le traitement thermique de l'oxyde de gamma-fer-(III) chargé d'hydroxyde de fer(II) et d'hydroxyde de cobalt est effectué entre 100 et 350 degrés C, en atmosphère d'un gaz inerte et d'un composé organique décomposable à cette température en présence d'oxyde de fer.

4. Procédé selon l'une des revendications 1 à 3, caractérisé par le fait que lors de la précipitation de l'hydroxyde de fer-(II) et de l'hydroxyde de cobalt sur l'oxyde de gamma-fer-(III), une substance organique décomposable à des températures comprises entre 100 et 350 degrés C en présence d'oxydes de fer est présente dans la suspension.

14

FIG.1

EP 0 201 822 B1